# EUROPEAN PATENT SPECIFICATION

(11) **EP 3 256 638 B1**
(45) Date of publication and mention of the grant of the patent: **19.01.2022**
(21) Application number: 16709844.1
(22) Date of filing: 05.02.2016
(51) Int. Cl.: D06M 15/267, D06M 15/564, C08F 214/08, C08F 220/36, C08F 220/58, C08F 220/32

(54) **METHODS FOR TREATING FIBROUS SUBSTRATES USING FLUORINE-FREE COMPOSITIONS INCLUDING ISOCYANATE-DERIVED (METH)ACRYLATE-CONTAINING POLYMERIC COMPOUNDS**
VERFAHREN ZUR BEHANDLUNG VON FASERIGEN SUBSTRATEN MIT FLUORFREIEN ZUSAMMENSETZUNG, DIE ISOCYANAT-ABGELEITETE (METH)ACRYLAT-ENTHALTENDE POLYMERE VERBINDUNGEN ENTHALTEN
MÉTHODE DE TRAITEMENT DE SUBTRATS FIBREUX AVEC DES COMPOSITIONS SANS FLUOR CONTENANT DES COMPOSÉS POLYMÈRES CONTENANT DES MÉTHACRYLATES DÉRIVÉS D'ISOCYANATES

(30) Priority: 13.02.2015 US 201562115937 P
(43) Date of publication of application: 20.12.2017
(73) Proprietor: 3M Innovative Properties Company, St. Paul, MN 55133-3427 (US)
(72) Inventor: COPPENS, Dirk, M., B-1831 Diegem (BE); DAMS, Rudolf, J., B-1831 Diegem (BE); JARIWALA, Chetan, P., Saint Paul, MN 55133-3427 (US)
(74) Representative: Vossius & Partner Patentanwälte Rechtsanwälte mbB
(86) International application number: PCT/US2016/016713
(87) International publication number: WO 2016/130415

(56) References cited:
- EP-A1- 0 919 576
- EP-A2- 0 448 399
- US-A- 4 495 243

## Description

### BACKGROUND

Compositions for treating fibrous substrates to enhance the water-repellency of the substrates are known and described in the literature, for example, in "Fluorinated Surfactants and Repellents," E. Kissa, Surfactant Science Series, vol. 97, Marcel Dekker, New York, Chapter 12, p. 516-551, or in "Chemistry and Technology of Silicones," by W. Noll, Academic Press, New York, Chapter 10, p. 585-595; however, there is a continual need for compositions that provide high water repellency, in particular high initial water repellency, and in certain situations, high water-repellent durability, especially compositions that are fluorine-free.

US-B-4,495,243 describes a release agent comprising (A) a polymer of at least one vinyl monomer of the cited general formula (I) which can contain a fluoroalkyl group, (B) a copolymer of at least one vinyl monomer of said formula (I) and another compound copolymerizable therewith, or (C) a mixture of said polymer (A) and said copolymer (B).

EP-A-2 448 399 describes a water-borne release coating system comprising a polymer latex prepared by the emulsion polymerization of certain specific long-chain monomers, and a coated sheet material comprising a flexible sheet and a release coating covering.

### SUMMARY OF THE INVENTION

The present disclosure provides methods of treating fibrous substrates using a fluorine-free fibrous treating composition.

The claimed invention provides a method of treating a fibrous substrate, the method comprising applying a fluorine-free treating composition in an amount sufficient to make the fibrous substrate water repellent having a minimum initial spray rating of at least 80, as determined by the Spray Rating Test, wherein the treating composition comprises:
one or more polymeric compounds derived from the polymerization of at least one (meth)acrylate monomer comprising at least one isocyanate-derived group and at least one hydrocarbon group having at least 16 carbon atoms,
wherein at least 70% by weight of the one or more polymeric compounds is obtained from polymerization of a (meth)acrylate monomer comprising at least one isocyanate-derived group and at least one hydrocarbon group having from 16 to 60 carbon atoms.

The present invention also provides a fibrous substrate treated by a method of the present invention. The fibrous substrate may be selected from the group of textile, leather, carpet, paper, and nonwoven fabrics.

Herein, a "fluorine-free" treating composition means that a treating composition includes less than 1 weight percent (1 wt-%) fluorine in a treating composition based on solids, whether in a concentrate or ready-to-use treating composition. In certain embodiments, a "fluorine-free" treating composition means that a treating composition includes less than 0.5 wt%, or less than 0.1 wt%, or less than 0.01 wt-%. The fluorine may be in the form of organic or inorganic fluorine-containing compounds.

The term "polymer" or "polymeric compound" includes compounds with at least 10 repeating units. This includes homopolymers and copolymers (with two or more kinds of monomeric units, including terpolymers, tetrapolymers, and the like). Such polymeric compounds have a weight average molecular weight of at least 3000 Daltons.

The term "residue" means that part of the original organic molecule remaining after reaction.

The term "hydrocarbon" refers to any substantially fluorine-free organic group that contains hydrogen and carbon. Such hydrocarbon groups may be cyclic (including aromatic), linear, or branched. Suitable hydrocarbon groups include alkyl groups, alkylene groups, arylene groups, and the like. Unless otherwise indicated, hydrocarbon groups typically contain from 1 to 60 carbon atoms. In some embodiments, hydrocarbon groups contain 1 to 30 carbon atoms, 1 to 20 carbon atoms, 1 to 10 carbon atoms, 1 to 6 carbon atoms, 1 to 4 carbon atoms, or 1 to 3 carbon atoms.

The term "alkyl" refers to a monovalent group that is a residue of an alkane and includes straight-chain, branched, cyclic, and bicyclic alkyl groups, and combinations thereof, including both unsubstituted and substituted alkyl groups. Unless otherwise indicated, the alkyl groups typically contain from 1 to 60 carbon atoms. In some embodiments, the alkyl groups contain 1 to 30 carbon atoms, 1 to 20 carbon atoms, 1 to 10 carbon atoms, 1 to 6 carbon atoms, 1 to 4 carbon atoms, or 1 to 3 carbon atoms. Examples of "alkyl" groups include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, octadecyl, behenyl, adamantyl, norbornyl, and the like.

The term "alkylene" refers to a divalent group that is a residue of an alkane and includes groups that are linear, branched, cyclic, bicyclic, or a combination thereof. Unless otherwise indicated, the alkylene group typically has 1 to 60 carbon atoms. In some embodiments, the alkylene group has 1 to 30 carbon atoms, 1 to 20 carbon atoms, 1 to 10 carbon atoms, 2 to 10 carbon atoms, 1 to 6 carbon atoms, or 1 to 4 carbon atoms. Examples of "alkylene" groups include methylene, ethylene, 1,3-propylene, 1,2-propylene, 1,4-butylene, 1,4-cyclohexylene, 1,6 hexamethylene, and 1,10 decamethylene.

The term "arylene" refers to a divalent group that is aromatic and, optionally, carbocyclic. The arylene has at least one aromatic ring. Optionally, the aromatic ring can have one or more additional carbocyclic rings that are fused to the aromatic ring. Any additional rings can be unsaturated, partially saturated, or saturated. Unless otherwise specified, arylene groups often have 5 to 20 carbon atoms, 5 to 18 carbon atoms, 5 to 16 carbon atoms, 5 to 12 carbon atoms, 6 to 12 carbon atoms, or 6 to 10 carbon atoms.

The term (meth)acrylate refers to acrylates and methacrylates.

The term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of' is meant including, and limited to, whatever follows the phrase "consisting of." Thus, the phrase "consisting of' indicates that the listed elements are required or mandatory, and that no other elements may be present. By "consisting essentially of' is meant including any elements listed after the phrase, and limited to other elements that do not interfere with or contribute to the activity or action specified in the disclosure for the listed elements. Thus, the phrase "consisting essentially of' indicates that the listed elements are required or mandatory, but that other elements are optional and may or may not be present depending upon whether or not they materially affect the activity or action of the listed elements.

The words "preferred" and "preferably" refer to claims of the disclosure that may afford certain benefits, under certain circumstances. However, other claims may also be preferred, under the same or other circumstances. Furthermore, the recitation of one or more preferred claims does not imply that other claims are not useful, and is not intended to exclude other claims from the scope of the disclosure.

In this application, terms such as "a," "an," and "the" are not intended to refer to only a singular entity, but include the general class of which a specific example may be used for illustration. The terms "a," "an," and "the" are used interchangeably with the phrases "at least one" and "one or more." The phrases "at least one of' and "comprises at least one of' followed by a list refers to any one of the items in the list and any combination of two or more items in the list.

The term "or" is generally employed in its usual sense including "and/or" unless the content clearly dictates otherwise.

The term "and/or" means one or all of the listed elements or a combination of any two or more of the listed elements.

Also herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

The term "room temperature" refers to a temperature of 20°C to 25°C or 22°C to 25°C.

Herein, when a group is present more than once in a formula described herein, each group is "independently" selected, whether specifically stated or not. For example, when more than one Q group is present in a formula, each Q group is independently selected. Furthermore, subgroups contained within these groups are also independently selected.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list.

### DETAILED DESCRIPTION OF ILLUSTRATIVE EMBODIMENTS

The present invention provides methods of treating fibrous substrates using fluorine-free treating compositions, as defined in the claims.

Treating compositions of the present disclosure are useful for treating a fibrous substrate to enhance the substrate's water repellency. As used herein, a substrate is water repellent if it demonstrates a minimum initial spray rating of at least 80, as determined by the Spray Rating Test described in the Examples Section. In certain embodiments, the initial spray rating is at least 90, or at least 100, as determined by the Spray Rating Test described in the Examples Section.

In certain embodiments, the fibrous substrates are treated such that they become durably water repellent. As used herein, a substrate is durably water repellent if it demonstrates a spray rating of at least 50 after 10 launderings, as determined by the Spray Rating Test with launderings (and optional launderings), described in the Examples Section. In certain embodiments, the spray rating is at least 80 after 10 launderings, or at least 80 after 20 launderings, as determined by the Spray Rating Test with launderings (and optional drying), described in the Examples Section.

Typically, an amount of treating composition is used to obtain a desired initial spray rating level and/or a desired spray rating level after laundering multiple times. In certain embodiments, the amount of treating composition is at least 0.1 weight percent (wt-%), or at least 0.2 wt-%, or at least 0.3 wt-% SOF (solids on fabric). In certain embodiments, the amount of treating composition is up to 2 wt-%, or up to 1.5 wt-%, or up to 1 wt-% SOF (solids on fabric).

Exemplary fibrous substrates include textile, leather, carpet, paper, and nonwoven fabrics.

Treating compositions of the present disclosure may be in the form of a concentrate, which may include up to 80 weight percent (wt-%) water, based on the total weight of the concentrated treating composition. Alternatively, treating compositions of the present disclosure may be in the form of a ready-to-use formulation, which may include more than 80 wt-% water, or at least 85 wt-% water, or at least 90 wt-% water, or at least 95 wt-% water, based on the total weight of the ready-to-use treating composition. In certain embodiments, a ready-to-use treating composition of the present disclosure include 98-99 wt-% water, based on the total weight of the ready-to-use treating composition.

Treating compositions of the present disclosure include one or more polymeric compounds derived from the polymerization of at least one (meth)acrylate monomer including at least one (typically, one) isocyanate-derived group and at least one (typically, one) hydrocarbon group having at least 16 carbon atoms (and in some embodiments, up to 60 carbon atoms). Such polymeric compounds may be homopolymers or copolymers (including terpolymers, tetrapolymers, and the like).

In certain embodiments, such polymeric compounds include at least 10 repeating units, or at least 20 repeating units, or at least 30 repeating units, or at least 50 repeating units, or at least 100 repeating units, or at least 200 repeating units, or at least 300 repeating units, or at least 400 repeating units, or at least 500 repeating units, or at least 600 repeating units, or at least 700 repeating units, or at least 800 repeating units, or at least 900 repeating units, or at least 1000 repeating units. In certain embodiments, such polymeric compounds include up to 10,000 repeating units.

In certain embodiments, such polymeric compounds have a weight average molecular weight of at least 3000 Daltons, or at least 10,000 Daltons, or at least 20,000 Daltons. In certain embodiments, such polymeric compounds have a weight average molecular weight of up to 200,000 Daltons. In certain embodiments, such polymeric compounds have a weight average molecular weight of up to 500,000 Daltons.

### (Meth)acrylate Monomers and Polymerization Thereof

In certain embodiments, the (meth)acrylate monomer that includes at least one (typically, one) isocyanate-derived group (e.g., a urethane group or a urea group) and at least one (typically, one) hydrocarbon group having at least 16 carbon atoms (and in some embodiments, up to 60 carbon atoms) has at least one of the following formulas:

R¹-NH-C(O)O-L¹-OC(O)C(R²)=CH₂ (Formula I)

;

R³-X¹-C(O)NH-L²-OC(O)C(R⁴)=CH₂ (Formula II)

; or

R⁵-X²-C(O)NH-Q-NH-C(O)O-L³-OC(O)C(R⁶)=CH₂ (Formula III)

In Formulas I, II, and III, R¹, R³, and R⁵ are independently a hydrocarbon group having 16 to 60 carbon atoms (in certain embodiments, 16 to 30 carbon atoms). Examples of suitable hydrocarbon groups include a hexadecyl (C16) group, octadecyl (C18) group, an arachidyl (C20) group, a behenyl (C22) group, a lignoceryl (C24) group, a ceryl (C26) group, a montanyl (C28) group, a myricyl (C30) group, a 2-dodecylhexadecyl (C28 branched) group, a 2-tetradecyloctadecyl (C32 branched) group, and long chain linear alkyl groups of 30 to 60 carbon atoms (available under the UNILIN brand). In certain embodiments, R³ and R⁵ are branched hydrocarbon groups. In certain embodiments, R¹, R³, and R⁵ are independently an octadecyl or a behenyl group.

In Formulas I, II, and III, R², R⁴, and R⁶ are independently H or CH₃.

In Formulas I, II, and III, L¹, L², and L³ are independently a branched or straight chain alkylene group having 2 to 10 carbon atoms, an arylene group (in certain embodiments, an arylene group having 5 to 12 carbon atoms), or a combination thereof. Examples of such alkylene groups include -CH2CH2-, -CH2CH2CH2-, -CH2CH2CH2CH2-, and the like. Examples of such arylene groups include phenyl, naphthyl, and the like. Examples of combinations of alkylene and arylene groups include benzyl, ethylphenyl, and the like. In certain embodiments, L¹, L², and L³ are independently a branched or straight chain alkylene group having 2 to 10 carbon atoms. In certain embodiments, L¹, L², and L³ are independently selected from an ethylene group, a butylene group, or a propylene group.

In Formulas II and III, X¹ and X² are independently O, S, -NH, or -N(R⁷) wherein R⁷ is a hydrocarbon group (in certain embodiments, an alkyl group) having 1 to 20 carbon atoms. Examples of R⁷ hydrocarbon groups include alkyl groups such as methyl, ethyl, decyl, octadecyl, and the like.

In Formula III, Q is a divalent isocyanate residue (i.e., an aromatic or aliphatic diisocyanate without the 2 isocyanate functional groups). Examples of divalent isocyanate residues include 2,4-toluenyl and 4,4'-methylenebis(phenyl).

Examples of suitable (meth)acrylate monomers of Formula I include the reaction product of stearylisocyanate with 2-hydroxyethyl(meth)acrylate (i.e., C₁₈H₃₇-NHC(O)O-CH₂CH₂-OC(O)C(R²)=CH₂) wherein R² is H or -CH₃), the reaction product of stearyl isocyanate with 3-hydroxypropyl(meth)acrylate, and the reaction product of stearylisocynate with 4-hydroxybutyl(meth)acrylate.

Examples of suitable (meth)acrylate monomers of Formula II include the reaction product of isocyanatoethyl(meth)acrylate with stearyl alcohol (i.e., C₁₈H₃₇-OC(O)NH-CH₂CH₂-OC(O)C(R⁴)=CH₂) wherein R⁴ is H or -CH₃), the reaction product of isocyanatoethyl(meth)acrylate with behenylalcohol, the reaction product of isocyanatoethyl(meth)acrylate with 2-tetradecyloctadecanol, and the reaction product of isocyanatoethyl(meth)acrylate with octadecylamine.

Examples of suitable (meth)acrylate monomers of Formula III include the reaction product of 2,4-toluene diisocyanate (TDI) with stearyl alcohol and 2-hydroxyethyl(meth)acrylate (i.e., C₁₈H₃₇-OC(O)NH-C₇H₆NHC(O)OCH₂CH₂-OC(O)CR⁶=CH₂) wherein R⁶ is H or -CH₃), the reaction product of TDI with stearyl alcohol and 3-hydroxypropyl(meth)acrylate, the reaction product of TDI with stearyl alcohol and 4-hydroxybutyl(meth)acrylate, the reaction product of TDI with behenylalcohol and 2-hydroxyethyl(meth)acrylate, and the like.

In certain embodiments, the (meth)acrylate monomer comprising at least one (typically, one) isocyanate-derived group (e.g., urethane group or urea group) and at least one (typically, one) hydrocarbon group having at least 16 carbon atoms has at least one of the following formulas:

C₁₈H₃₇-NH-C(O)O-CH₂CH₂-OC(O)C(R²)=CH₂ (Formula Ia);

C₁₈H₃₇OC(O)NH-CH₂CH₂-OC(O)C(R⁴)=CH₂ (Formula IIa);

or

C₁₈H₃₇O-C(O)NH-C₇H₆-NHC(O)O-CH₂CH₂-OC(O)C(R⁶)=CH₂ (Formula IIIa)

; wherein R², R⁴, and R⁶ are independently H or CH₃.

Compounds of Formula Ia are within the scope of compounds of Formula I. Compounds of Formula IIa are within the scope of compounds of Formula II. Compounds of Formula IIIa are within the scope of compounds of Formula III, wherein Q in Formula III is an isocyanate residue (-C₇H₆-) derived from 2,4-toluenediisocyanate.

Techniques and conditions for making the (meth)acrylate monomers described herein would be well known to one of skill in the art. The preparation of certain urethane (meth)acrylate monomers is presented in the Examples Section. For example, a suitable (meth)acrylate monomer reactant (e.g., hydroxyethyl acrylate) and an isocyanate reactant (e.g., steraryl isocyanate) can be combined with or without an appropriate catalyst.

A catalyst in an appropriate amount (e.g., 500 ppm) may be used, but is not mandatory (particularly if higher temperatures are used). Exemplary catalysts include dibutyl tindilaurate (DBTDL) and bismuth neodecanoate (e.g., Shepherd Bicat 8108M, ABCR Bismuth (III) neodecanoate, superconductor grade, about 60% in neodecanoic acid (15-20% Bi), or Strem Chemicals Bismuth (III) neodecanoate, superconductor grade, about 60% in neodecanoic acid (15-20% Bi)).

The reaction to form a (meth)acrylate with an isocyanate-derived group can typically be carried out in a temperature range of 40°C to 100°C, or 70°C to 100°C, or 75°C to 95°C preferably under dry conditions (e.g., dry air). If no catalyst is used, a reaction temperature of 70°C to 100°C is preferred. Typically, the reaction is carried out in 1-24 hours, or 4-15 hours.

One or more (meth)acrylate monomers that include an isocyanate-derived group (e.g., a urethane group or a urea group) and a hydrocarbon group having at least 16 carbon atoms (and in some embodiments, up to 60 carbon atoms) may be used in various combinations to form polymeric compounds of the present disclosure. Thus, the polymeric compounds may be homopolymeric or copolymeric.

In certain embodiments, the resultant polymers include at least 70%, or at least 80%, or at least 85%, or at least 90%, by weight of the total monomers, or all of the repeating units, include at least one (typically, one) isocyanate-derived group and at least one (typically, one) hydrocarbon group having at least 16 carbon atoms (and in certain embodiments, up to 60 carbon atoms, or up to 30 carbon atoms).

In certain embodiments, at least 70 wt-%, or at least 80 wt-%, or at least 85 wt-%, or at least 90 wt-%, by weight of the total monomers, or all of the monomers, used to make the polymers are (meth)acrylate monomers.

Alternatively stated, in the present invention, at least 70%, or at least 80%, or at least 85%, or at least 90%, by weight of the one or more polymeric compounds is obtained from polymerization of at least one (meth)acrylate monomer comprising at least one isocyanate-derived group and at least one hydrocarbon group having from 16 to 60 carbon atoms.

In certain embodiments, other ethylenically unsaturated monomers may be copolymerized with the ethylenically unsaturated (meth)acrylate monomers with isocyanate-derived and hydrocarbon groups. For example, in certain embodiments, the reaction mixture for making the one or more polymeric compounds additionally includes a durability enhancing (meth)acrylate. In certain embodiments, the durability enhancing (meth)acrylate provides the one or more polymeric compounds with durability enhancing groups selected from blocked isocyanate groups, epoxy groups, chlorohydroxypropyl groups, hydroxyalkyl groups, N-methylol groups, acetoacetoxyalkyl groups, and combinations thereof.

Other monomers that could be copolymerized with the ethylenically unsaturated (meth)acrylate monomers with isocyanate-derived and hydrocarbon groups, include, for example:
a) monomers of Formulas I, II, and III, wherein R¹, R³, and R⁵ are hydrocarbon groups containing from 1 to 15 carbon atoms (such monomers include the reaction product of butylisocyanate with 2-hydroxyethyl(meth)acrylate, the reaction product of butylisocyanate with 3-hydroxypropyl(meth)acrylate, and the reaction product of 4-hydroxybutyl(meth)acrylate with butylisocyanate);
b) other ethylenically unsaturated monomers such as olefinic hydrocarbons (including isoprene, butadiene, or chloroprene), vinyl-, allyl- or vinylidene-halides (including vinylidene chloride or vinyl chloride), styrene and its derivatives, vinyl esters (including vinylacetate), allylesters (including allylacetate), alkylvinyl, or alkylallylethers (including octadecylvinylether), nitriles (including acrylonitrile), maleate or itaconate esters (including di-octadecylitaconate), and (meth)acrylamides (including octadecylacrylamide);
c) (meth)acrylates not having an isocyanate linking group and a hydrocarbon group having at least 16 carbons, such as octadecyl acrylate, octadecyl methacrylate, behenyl acrylate, and the like;
d) (meth)acrylates not having an isocyanate derived linking group and a hydrocarbon group having less than 16 carbon atoms include 2-hydroxyethylacrylate, methyl (meth)acrylate, butyl(meth)acrylate, ethylhexyl(meth)acrylate, dodecyl(meth)acrylate, and the like; and
e) durability enhancing (meth)acrylates containing a functional group that is capable of undergoing further reactions, such as crosslinking, network building, curing, grafting, and the like (such monomers enhance the durability of the water repellency of the polymeric compounds and include glycidyl methacrylate, allyl methacrylate, N-methylol acrylamide, 3-chloro-2-hydroxy propyl(meth)acrylate, the reaction product of AOI with 2-butanoneoxime, and the like).

In certain embodiments, the resulting polymeric compounds can be prepared by a free-radical polymerization of (i) one or more (meth)acrylates having an isocyanate-derived group and a hydrocarbon chain having at least 16 carbon atoms, (ii) one or more (meth)acrylates having an isocyanate-derived group and a hydrocarbon chain having less than 16 carbon atoms, (iii) one or more (meth)acrylates having no isocyanate-derived group but with a hydrocarbon chain of at least 16 carbon atoms, (iv) one or more (meth)acrylates having no isocyanate-derived group but with a hydrocarbon chain of less than 16 carbon atoms, and (v) one or more (meth)acrylates containing a functional group that is capable of undergoing further reactions, with the proviso that the amount of (meth)acrylates having an isocyanate-derived group and having at least 16 carbon atoms is at least 70 wt-%, or at least 80 wt-%, or at least 85 wt-%, or at least 90 wt-%, or preferably 100 wt-% of the total amount of monomers.

For example, in one embodiment (as exemplified by Example 7), the polymeric compound is a compound derived from a co-polymerization of the "SA-AOI" urethane acrylate, which has the following structure:

R³-X¹-C(O)NH-L²-OC(O)C(R⁴)=CH₂ (Formula II)

wherein:
R³ is a hydrocarbon group having 18 carbon atoms;
R⁴ is H;
L² is an alkylene group 2 carbon atoms; and
X¹ is O;
and the "AOI-MEKO" urethane acrylate, which is a durability enhancing acrylate with blocked isocyanate groups.

Herein acryonyms, such as HOEA, SI, AOI, MOI, etc., are used both to represent the reactants (e.g., monomers) and the corresponding residues in the polymers as a result of polymerization.

In order to prepare the polymeric compounds, a free-radical initiator may be used to initiate the polymerization. Free-radical initiators include those known in the art and include, in particular, azo compounds such as 2,2'-azobis(2-methylbutyronitrile), 2,2'-azobisisobutyronitrile (AIBN) and 2,2'-azobis(2-cyanopentane), and the like, hydroperoxides such as cumene, t-butyl- and t-amyl-hydroperoxide, and the like, peroxyesters such as t-butylperbenzoate, di-t-butylperoxyphtalate, and the like, and diacylperoxides such as benzoyl peroxide, lauroyl peroxide, and the like.

The polymerization may be carried out in a wide variety of solvents suitable for organic free-radical reactions. Examples of suitable solvents include aliphatic and alicyclic hydrocarbons (e.g., hexane, heptane, cyclohexane), ethers (e.g., diethylether, glyme, diglyme, diisopropyl ether), esters (e.g., ethylacetate, butylacetate), ketones (e.g., acetone, methylethyl ketone, methyl isobutyl ketone), and mixtures thereof.

The polymerizations can also be carried out in aqueous media, such as in an emulsion polymerization, using the appropriate emulsifiers and initiators known to those skilled in the art. Emulsifiers include nonionic, cationic, amphoteric, or anionic surfactants, such as sodium alkylsulphonates, sodium alkylbenzenesulphonates, sodium dialkylsulphosuccinates, (C12-C18)alkylalcohol-ethyleneoxide adducts, polyethoxylatednonylphenols, or alkylquaternary ammoniumethoxylates.

The polymerization reaction can be carried out at a temperature suitable for conducting a free-radical polymerization reaction. Particular temperatures and solvents for use can be easily selected by those skilled in the art based on considerations such as the solubility of reagents, the temperature required for the use of a particular initiator, molecular weight desired, and the like. While it is not practical to enumerate a particular temperature suitable for all initiators and all solvents, generally suitable temperatures are 30°C and 150°C. In certain embodiments, the temperature is 55°C and 90°C, or 75°C and 80°C. Reaction times typically are within 1 to 24 hours, and often within 4 to 15 hours.

### Treating Compositions

A treating composition that includes one or more polymeric compounds of the present disclosure is used as an aqueous composition, in particular, an aqueous dispersion in water.

After completion of the polymerization, the final reaction mixture may be dispersed in water using a surfactant or mixture of surfactants in an amount sufficient to stabilize the dispersion. The polymeric compounds are usually made in solution in a solvent. They can be dispersed in water through vigorously mixing and homogenizing with the help of a surfactant or emulsifier and subsequent homogenization, for example, by a Manton Gaulin homogenizer or ultrasound homogenizer. An organic solvent-free dispersion can be obtained by subsequent distillation of the solvent.

A typical dispersion will contain water in an amount of 70 to 20000 parts by weight based on 100 parts by weight of polymeric compounds or mixtures of such compounds. The surfactant or mixture of surfactants is preferably present in an amount of 1 to 25 parts by weight, or 5 to 15 parts by weight, based on 100 parts by weight of the polymeric compounds or mixture of such compounds.

Treating compositions of the present disclosure can include conventional cationic, nonionic, anionic, and/or zwitterionic (i.e., amphoteric) surfactants (i.e., emulsifiers). A mixture of surfactants may be used, e.g., containing nonionic and ionic surfactants. Suitable nonionic surfactants can have high or low HLB values, such as TERGITOL's, TWEEN's, and the like. Suitable cationic surfactants include mono- or bi-tail ammonium salts. Suitable anionic surfactants include sulfonic and carboxylic aliphatic compounds and their salts, such as sodiumdodecylbenzenesulphonate (available from Rhodia, France), and the like. Suitable amphoteric surfactants include cocobetaines, sulphobetaines, amine-oxides, and the like.

In certain embodiments, surfactants suitable for use in the treating compositions of the present disclosure are described in International Publication No. WO 2013/162704.

A treating composition of the present disclosure may include at least one paraffin wax. In certain embodiments, the paraffin wax has a melting point of 40°C to 75°C. In certain embodiments, the paraffin wax has a melting point of 60°C to 75°C.

When present in a treating composition of the present disclosure, the total amount of one or more paraffin waxes is an amount of 30 wt-% to 70 wt-%, and the total amount of one or more polymeric compounds is an amount of 30 wt-% to 70 wt-%. In certain embodiments, the total amount of one or more paraffin waxes is an amount of 50 wt-% to 70 wt-%, and the total amount of one or more polymeric compounds is an amount of 30 wt-% to 50 wt-%. These amounts are based on the total weight of a treating composition (in a ready-to-use or a concentrated form).

Also, treating compositions of the present disclosure may further include one or more of a coalescing solvent, an anti-freeze solvent, an emulsifier, or a stabilizer against one or more microorganisms.

### EXEMPLARY EMBODIMENTS

Embodiment 1 is a method of treating a fibrous substrate, the method comprising applying a fluorine-free treating composition in an amount sufficient to make the fibrous substrate water repellent, wherein the treating composition comprises:
   one or more polymeric compounds derived from the polymerization of at least one (meth)acrylate monomer comprising at least one isocyanate-derived group and at least one hydrocarbon group having at least16 carbon atoms, wherein at least 70% by weight of the one or more polymeric compounds is obtained from polymerization of a (meth)acrylate monomer comprising at least one isocyanate-derived group and at least one hydrocarbon group having from 16 to 60 carbon atoms.
Embodiment 2 is the method of embodiment 1 wherein the one or more polymeric compounds is obtained from polymerization of at least one (meth)acrylate monomer comprising at least one isocyanate-derived group and at least one hydrocarbon group having from 16 to 60 carbon atoms.
Embodiment 3 is the method of embodiment 1 wherein at least 85% by weight of the one or more polymeric compounds is obtained from polymerization of a (meth)acrylate monomer comprising at least one isocyanate-derived group and at least one hydrocarbon group having from 16 to 60 carbon atoms.
Embodiment 4 is the method of any one of embodiments 1 through 3 wherein the treating composition comprises one or more polymeric compounds derived from the polymerization of at least one (meth)acrylate monomer having at least one of the following formulas:

   R¹-NH-C(O)O-L¹-OC(O)C(R²)=CH₂ (Formula I);

   R³-X¹-C(O)NH-L²-OC(O)C(R⁴)=CH₂ (Formula II);

   and

   R⁵-X²-C(O)NH-Q-NHC(O)O-L³-OC(O)C(R⁶)=CH₂ (Formula III);

   wherein:
   R¹, R³, and R⁵ are independently a hydrocarbon group having at least 16 carbon atoms (and in some embodiments, up to 60 carbon atoms) (in certain embodiments, R³ and R⁵ are branched hydrocarbon groups);
   R², R⁴, and R⁶ are independently H or CH₃;
   L¹, L², and L³ are independently a branched or straight chain alkylene group having 2 to 10 carbon atoms, an arylene group (in certain embodiments, an arylene group having 5 to 12 carbon atoms), or a combination thereof;
   X¹ and X² are independently O, S, -NH, or -N(R⁷), wherein R⁷ is a hydrocarbon group having 1 to 20 carbon atoms; and
   Q is an isocyanate residue.
Embodiment 5 is the method of embodiment 4 wherein R¹, R³, and R⁵ are independently a hydrocarbon group having 16 to 60 carbon atoms.
Embodiment 6 is the method of embodiment 5 wherein R¹, R³, and R⁵ are independently an octadecyl or behenyl group.
Embodiment 7 is the method of any one of embodiments 4 to 6 wherein L¹, L², and L³ are independently an alkylene group having 2 to 10 carbon atoms.
Embodiment 8 is the method of embodiment 7 wherein L¹, L², and L³ are independently selected from an ethylene group, a butylene group, or a propylene group.
Embodiment 9 is the method of any one of embodiments 1 through 8 wherein the isocyanate-derived group present in the (meth)acrylate monomer is a urethane group or a urea group.
Embodiment 10 is the method of any one of embodiments 1 through 9 wherein the one or more polymeric compounds have a weight average molecular weight of at least 3000 Daltons, or 3000 Daltons to 500,000 Daltons, or 3000 Daltons to 200,000 Daltons.
Embodiment 11 is the method of embodiment 10 wherein the one or more polymeric compounds have a weight average molecular weight of at least 10,000 Daltons, or 10,000 Daltons to 500,000 Daltons, or 10,000 Daltons to 200,000 Daltons.
Embodiment 12 is the method of embodiment 11 wherein the one or more polymeric compounds have a weight average molecular weight of at least 20,000 Daltons, or 20,000 Daltons to 500,000 Daltons, or 20,000 Daltons to 200,000 Daltons.
Embodiment 13 is the method of any one of embodiments 1 through 12 wherein the one or more polymeric compounds have an average of at least 10 repeating units (or at least 20 repeating units) of at least one (meth)acrylate monomer comprising at least one isocyanate-derived group and at least one hydrocarbon group having at least 16 carbon atoms (and in some embodiments, up to 60 carbon atoms).
Embodiment 14 is the method of embodiment 1,
   wherein the treating composition comprises:
   one or more polymeric compounds derived from the polymerization of at least one (meth)acrylate having at least one of the following formulas:

   C₁₈H₃₇-NH-C(O)O-CH₂CH₂-OC(O)C(R²)=CH₂ (Formula Ia);

   C₁₈H₃₇OC(O)NH-CH₂CH₂-OC(O)C(R⁴)=CH₂ (Formula IIa);

   or

   C₁₈H₃₇O-C(O)NH-C₇H₆-NHC(O)O-CH₂CH₂-OC(O)C(R⁶)=CH₂ (Formula IIIa);

   wherein R², R⁴, and R⁶ are independently H or CH₃.
Embodiment 15 is the method of embodiment 14 wherein the one or more polymeric compounds have a weight average molecular weight of at least 3000 Daltons, or 3000 Daltons to 500,000 Daltons, or 3000 Daltons to 200,000 Daltons.
Embodiment 16 is the method of embodiment 14 or 15 wherein the one or more polymeric compounds have an average of at least 10 repeating units of the at least one (meth)acrylate.
Embodiment 17 is the method of any one of embodiments 1 through 16 wherein the reaction mixture for making the one or more polymeric compounds additionally includes a durability enhancing (meth)acrylate.
Embodiment 18 is the method of embodiment 17 wherein the durability enhancing (meth)acrylate provides the one or more polymeric compounds with durability enhancing groups selected from blocked isocyanate groups, epoxy groups, chlorohydroxypropyl groups, hydroxyalkyl groups, N-methylol groups, acetoacetoxyalkyl groups, and combinations thereof.
Embodiment 19 is the method of any one of embodiments 1 through 18 wherein the composition is an aqueous dispersion optionally comprising one or more additives selected from a surfactant, a coalescing solvent, an anti-freeze solvent, an emulsifier, or a stabilizer against one or more microorganisms.
Embodiment 20 is the method of any one of embodiments 1 through 19 wherein the fibrous substrate is selected from the group of textile, leather, carpet, paper, and nonwoven fabrics.
Embodiment 21 is a fibrous substrate treated by the method of any one of embodiments 1 through 20.

### EXAMPLES

Objects and advantages of this invention are further illustrated by the following examples, but the particular materials and amounts thereof recited in these examples, as well as other conditions and details, should not be construed to unduly limit this invention. These examples are merely for illustrative purposes only and are not meant to be limiting on the scope of the appended claims.

**Materials List**

| Material | Description | Source |
|---|---|---|
| ODA | octadecyl acrylate, monomer | Sigma-Aldrich, Belgium |
| ODMA | octadecyl methacrylate, monomer | Sigma-Aldrich, Belgium |
| BMA | behenyl methacrylate (C18-C22), monomer | Sigma-Aldrich, Belgium |
| BA | behenyl acrylate (C18-C22), monomer | Sigma-Aldrich, Belgium |
| VC12 | 1,1-dichloroethene | Sigma-Aldrich, Belgium |
| NMAM | N-methylolacrylamid | Sigma-Aldrich, Belgium |
| V-59 | 2,2' -Azobis(2-methylbutyronitrile), initiator | Commercially available under the trade designation "VAZO V-59" from Wako Pure Chemical Industries, Ltd., Germany |
| ethylacetate | ethylacetate, solvent | Sigma-Aldrich, Belgium |
| SA | Stearyl alcohol, reactant | Sigma-Aldrich, Belgium |
| DBTDL | Dibutyltin dilaurate, catalyst | Sigma-Aldrich, Belgium |
| AOI | Isocyanatoethylacrylate | Showa Denko, Japan |
| MOI | Isocyanatoethylmethacrylate | Showa Denko, Japan |
| MEKO | 2-butanoneoxime, blocking agent | Sigma-Aldrich, Belgium |
| Ethoquad C-12 | Quaternized coco amine ethoxylate, emulsifier | Commercially available under the trade designation "Ethoquad C-12" from Akzo Nobel, Stenungsund, Sweden |
| Tergitol TMN-6 | Nonionic emulsifier | Dow Chemical, Midland, MI |
| Tergitol 15-S-30 | Nonionic emulsifier | Dow Chemical, Midland, MI |
| Armocare VGH-70 | Ester based quat emuslifier, dipalmitoylethyl dimonium chloride | Commercially available from AkzoNobel, |
| | | Chicago, IL |
| stearyl isocyanate (SI) | octadecyl isocyanate | Sigma-Aldrich, Belgium |
| HOEA | 2-hydroxyethyl acrylate, monomer | Sigma-Aldrich, Belgium |
| HOEMA | 2-hydroxyethyl methacrylate, monomer | Sigma-Aldrich, Belgium |
| HOBA | 4-hydroxybutyl acrylate, monomer | Sigma-Aldrich, Belgium |
| HOPA | 3-hydroxypropyl acrylate, monomer | Sigma-Aldrich, Belgium |
| TDI | 2,4-toluene diisocyanate | Commercially available under the trade designation "Desmodur T-100 TDI" from Bayer Material Science AG, Leverkusen, Germany |
| BI-HOEA | Reaction product of butyl isocyanate and hydroxyethyl acryl ate | |
| PES Microfiber | Polyester fabric | Chyang Sheng Dyeing and Finishing Company Ltd., Taiwan |
| PA Microfiber | Polyamide fabric, style 6145 | Sofinal NV, Belgium |
| Guerbet 32 alcohol | 2-tetradecyloctadecanol | Commercially available under the trade designation "ISOFOL 32" from Sasol, Germany |
| GMA | glycidylmethacrylate, durability enhancing methacrylate | Sigma-Aldrich, Belgium |

### Test Methods

### Spray Rating (SR)

The spray rating of a treated substrate is a value indicative of the dynamic repellency of the treated substrate to water that impinges on the treated substrate. The repellency was measured by Test Method 22-1996, published in the 2001 Technical Manual of the American Association of Textile Chemists and Colorists (AATCC), and is expressed in terms of a 'spray rating' of the tested substrate. The spray rating was obtained by spraying 250 milliliters (mL) water on the substrate from a height of 15 centimeters (cm). The wetting pattern is visually rated using a 0 to 100 scale, where 0 means complete wetting and 100 means no wetting at all. Spray rating was measured initially and after the fabric was laundered 5, 10, or 20 times (designated as 5L, 10L, or 20L, respectively).

The laundering procedure consisted of placing a 400-900 cm² sheet of treated substrate in a washing machine (Miele Novotronic T490) along with ballast sample (1.9 killogram (kg) of 8-ounce fabric). A commercial detergent ("Sapton," available from Henkel, Germany, 46 grams (g)) was added. The substrate and ballast load were washed using a short wash cycle at 40°C, followed by a rinse cycle and centrifuging. The sample was not dried between repeat cycles. After the required number of cycles the textile samples were dried in a Miele T-356 tumble drier, setting 'Extra dry,' and conditioned overnight at room temperature before drying.

### Treatment Procedure via "Padding" Process

Before application to the textile, the 30% solids polymer dispersions were diluted with distilled water at a concentration of 20 grams/liter. The treatments were applied onto the textile substrates, by immersing the substrates in the treatment dispersion and agitating until the substrate was saturated. The saturated substrate was then run through a padder/roller to remove excess of the dispersion and to obtain a certain Percent Wet Pick Up (WPU) (100% WPU means that after this process the substrate absorbed 100% of its own weight of the treatment dispersion before drying). A dark grey polyester and grey polyamide microfiber fabric was treated with these impregnation baths (wet pick up see tables). For Examples 1-5 and Comparative Examples A-E after application of the treatment solution, the fabrics were dried, and cured, for 2 minutes at 150°C, and conditioned overnight. The fabrics were tested for their "spray rating." For Examples 7-10 see "Results" for modified procedure.

### Examples

### Preparation of the Urethane Acrylate Monomers Based on Stearyl Isocyanate

In a 1-liter round-bottomed 3-necked reaction flask 295.5 grams (g) of stearyl isocyanate (1 mole) was mixed with 116 g of HOEA (2-hydroxyethyl acrylate) (1 mole). At room temperature a clear solution was obtained. The reaction quickly started after the addition of 5 drops of DBTDL, the temperature of the reaction mixture spontaneously increased, and a white insoluble material started to form in the mixture. Temperature was raised to 80°C and the reaction was continued for 3 hours at 80°C. After this period, the FTIR spectrum showed all NCO disappeared. The structure of the final material was confirmed by NMR to be C₁₈H₃₇NHC(O)OCH₂CH₂OC(O)CH=CH₂. At room temperature a hard solid waxy material was obtained referenced as "SI-HOEA."

With the same procedure stearyl isocyanate was reacted with different hydroxy functional (meth)acrylates: 2-hydroxyethyl methacrylate (resulting in "SI-HEMA"), 4-hydroxybutyl acrylate (resulting in "SI-HOBA"), 3-hydroxypropyl acrylate (resulting in "SI-HOPA").

### Preparation of Urethane Acrylate Monomers Based on Stearyl Alcohol

In a 1-liter round-bottomed 3-necked reaction flask, 270.5 g SA (1 mole) was mixed with 174.2 g TDI (1 mole) and 374 g ethyl acetate (60% solids). The temperature was increased to 40°C, and the mixture became clear, a spontaneous exotherm to 50°C took place, and some insoluble material was formed. Product mixture was kept at 45°C overnight and a partially insoluble material was obtained. Then, 116.1 g 2-hydroxyethyl acrylate (1 mole) and 3 drops DBTDL were added. Temperature was increased to reflux temperature for 6 hours. After this reaction the FTIR spectrum showed no NCO was present in the mixture. The material will be referred to as "SA-TDI-HOEA."

In a 1-liter round-bottomed 3-necked reaction flask, 270.5 g SA (1 mole) was mixed with 141.12 g AOI (1 mole). At approximately 60°C a clear solution was obtained, and 5 drops of DBTDL was added. The temperature of the reaction mixture spontaneously increased. Temperature was kept at 80°C and the reaction was continued for 3 hours at 80°C. After this, period the FTIR spectrum showed all NCO disappeared. The monomer will be referred to as "SA-AOI."

With the same procedure, SA (stearyl alcohol) was reacted with MOI (2-isocyanatoethyl methacrylate). This monomer will be referred to as "SA-MOI."

### Examples 1-5 and Comparatives A-E. Preparation of Urethane (Meth)acrylate Homopolymers

In a glass bottle, 60 g of "SI-HOEA" was mixed with 90 g of ethylacetate and 0.25 g of V-59 initiator. The bottle was purged with nitrogen, closed, and placed overnight in a pre-heated launder-o-meter at 75°C. This resulted in a viscous clear yellowish polymer solution at 75°C. This polymer solution was then dispersed in water by mixing it at 60°C with a water phase, consisting of 154 g deionized (DI) water, 1.6 g Ethoquad C-12, 3.6 g Tergitol TMN-6, and 1.8 g Tergitol 15-S-30. This premix was then ultrasonicated with a 'Branson Sonifier' for 6 minutes at maximum setting. Then, the ethylacetate was removed by vacuum distillation to result in a stable solvent-free dispersion, which was diluted to 30% solids with deionized water (DI-water). The material is referred to as "poly SI-HOEA" (EX1). The material of EX1 is a compound derived from the polymerization of an acrylate wherein the acrylate has the following structure:

R¹-NH-C(O)O-L¹-OC(O)C(R²)=CH₂ (Formula I)

wherein:
R¹ is a hydrocarbon group having 18 carbon atoms;
R² is H; and
L¹ is an alkylene group having 2 carbon atoms.

Via the same emulsification procedure of EX1 polymer dispersion was made from "SI-HOBA" (EX2). The material of EX2 is a compound derived from the polymerization of an acrylate wherein the acrylate has the following structure:

R¹-NH-C(O)O-L¹-OC(O)C(R²)=CH₂ (Formula I)

wherein:
R¹ is a hydrocarbon group having 18 carbon atoms;
R² is H; and
L¹ is an alkylene group having 4 carbon atoms.

Via the same emulsification procedure of EX1 polymer dispersion was made from "SI-HOPA" (EX3). The material of EX3 is a compound derived from the polymerization of an acrylate wherein the acrylate has the following structure:

R¹-NH-C(O)O-L¹-OC(O)C(R²)=CH₂ (Formula I)

wherein:
R¹ is a hydrocarbon group having 18 carbon atoms;
R² is H; and
L¹ is an alkylene group having 3 carbon atoms.

Via the same emulsification procedure of EX1 polymer dispersion was made from "SI-HOEMA" (EX4). The material of EX4 is a compound derived from the polymerization of an acrylate wherein the acrylate has the following structure:

R¹-NH-C(O)O-L¹-OC(O)C(R²)=CH₂ (Formula I)

wherein:
R¹ is a hydrocarbon group having 18 carbon atoms;
R² is CH₃; and
L¹ is an alkylene group having 2 carbon atoms.

Via the same emulsification procedure of EX1 polymer dispersion was made from "SA-TDI-HOEA" (EX5). The material of EX5 is a compound derived from the polymerization of an acrylate wherein the acrylate has the following structure:

R⁵-X²-C(O)NH-Q-NHC(O)O-L³-OC(O)C(R⁶)=CH₂ (Formula III)

wherein:
R⁵ is a hydrocarbon group having 18 carbon atoms;
R⁶ is H;
L³ is an alkylene group having 2 carbon atoms;
X² is O; and
Q is a 2,4-toluene diisocyanate (TDI) residue.

Via the same procedure polymer dispersions of Comparative Examples A-E were made of oligomers of octadecyl acrylate (CE A; ODA), oligomers of octadecyl methacrylate (CE B; ODMA), oligomers of behenyl acrylate (CE C; BA A), oligomers of behenyl methacrylate (CE D; BMA), and oligomers of a urethane acrylate without a long-chain hydrocarbon (CE E, "BI-HOEA").

Spray rating performances are shown in Table 1.

**Table 1: Spray Ratings Homopolymers**

| Example | PES (100% WPU) Initial | PA (93% WPU) Initial |
|---|---|---|
| EX1 | 100 | 100 |
| EX2 | 90 | 100 |
| EX3 | 80 | 100 |
| EX4 | 80 | 100 |
| EX5 | 100 | 100 |
| CE A | 0 | 0 |
| CE B | 0 | 0 |
| CE C | 0 | 0 |
| CE D | 0 | 0 |
| CE E | 0 | 0 |

These results clearly demonstrate that the polymeric materials, made from the polymerization of (meth)acrylates with urethane groups, outperform the materials made with (meth)acrylates that do not have a urethane group (CE A, B, C, and D) or materials made with urethane acrylate monomers without a short-chain hydrocarbon group (CE E using "BI-HOEA" having a butyl group as a hydrocarbon group).

### Example 6: Poly(SA-AOI)

### Synthesis SA-AOI urethane acrylate

In a 250-mL three-necked flask was placed 54 g (0.2 mol) stearyl alcohol (SA), 28.2 g AOI (0.2 mol), 35 g ethylacetate, and 1 drop of DBTDL. The mixture was reacted for 5 hours at 84°C under nitrogen atmosphere. IR indicated that all isocyanate groups were reacted and that the urethane acrylate was formed. A clear solution at 84°C was obtained ("SA-AOI").

Using the same procedure the following related urethane acrylates were prepared: "AOI-MEKO," but using MEKO instead of stearyl alcohol; and "AOI-Guerbet 32 alcohol," from reaction of AOI with Guerbet 32 alcohol.

### Synthesis of homopolymer Poly(SA-AOI)

In a 250-mL three-necked flask fitted with a stirrer, heating mantle, cooler, and thermometer were placed 100 g of above-prepared "SA-AOI" urethane acrylate, 100 g ethylacetate, and 0.4 g VAZO-67. The mixture was degassed 3 times using aspirator vacuum and nitrogen pressure. The mixture was heated to 75°C under a nitrogen atmosphere for 6 hours followed by addition of 0.1 g VAZO-67 and continued reaction for 16 hours.

### Examples 7 to 10: Synthesis of homo- and co-polymers

### Example 7: Poly (SA-AOI/AOI-MEKO 90/10)

In a 250-mL three-necked flask fitted with a stirrer, heating mantle, cooler, and thermometer were placed 90 g of above-prepared "SA-AOI" urethane acrylate, 10 g of above-prepared "AOI-MEKO" urethane acrylate, 100 g ethylacetate, and 0.4 g VAZO-67. The mixture was degassed 3 times using aspirator vacuum and nitrogen pressure. The mixture was heated to 75°C under a nitrogen atmosphere for 6 hours followed by addition of 0.1 g VAZO-67 and continued reaction for 16 hours.

The material of Example 7 is a polymeric compound derived from a co-polymerization of acrylates wherein:
1) the "SA-AOI" urethane acrylate has the following structure:

   R³-X¹-C(O)NH-L²-OC(O)C(R⁴)=CH₂ (Formula II)

   wherein:
   R³ is a hydrocarbon group having 18 carbon atoms;
   R⁴ is H;
   L² is an alkylene group 2 carbon atoms; and
   X¹ is O;
   and
2) the "AOI-MEKO " urethane acrylate is a durability enhancing acrylate with blocked isocyanate groups.

### Example 8: Poly (SI-HOEA / AOI-MEKO 90 / 10)

In the procedure of Example 7, all SA-AOI urethane acrylate was replaced by SI-HOEA urethane acrylate. The material of Example 8 is a polymeric compound derived from a co-polymerization of acrylates wherein:
1) "SI-HOEA" urethane acrylate has the following structure:

   R¹-NH-C(O)O-L¹-OC(O)C(R²)=CH₂ (Formula I);

   wherein:
   R¹ is a hydrocarbon group having 18 carbon atoms;
   R² is H; and
   L¹ is an alkylene group having 2 carbon atoms.
   and
2) the "AOI-MEKO" urethane acrylate is a durability enhancing acrylate with blocked isocyanate groups.

### Example 9: Poly (AOI-Guerbet 32/AOI-MEKO 90/10)

Example 9 was prepared using the synthetic procedure to prepare Example 7, but replacing the SA-AOI urethane acrylate by AOI-Guerbet 32 urethane acrylate. The material of EX9 is a polymeric compound derived from a co-polymerization of acrylates wherein:
1) the "AOI-Guerbet 32" urethane acrylate has the following structure:

   R³-X¹-C(O)NH-L²-OC(O)C(R⁴)=CH₂ (Formula II)

   wherein:
   R³ is a hydrocarbon group having 32 carbon atoms;
   R⁴ is H;
   L² is an alkylene group 2 carbon atoms; and
   X¹ is O;
   and
2) the "AOI-MEKO "urethane acrylate is a durability enhancing acrylate with blocked isocyanate groups.

### Example 10: Poly (SA-AOI/GMA 90/10)

Example 10 was prepared using the procedure of Example 7 but using GMA durability enhancing acrylate instead of AOI-MEKO urethane acrylate. The material of EX10 is a polymeric compound derived from a co-polymerization of an acrylate and methacrylate wherein:
1) the acrylate has the following structure:

   R³-X¹-C(O)NH-L²-OC(O)C(R⁴)=CH₂ (Formula II)

   wherein:
   R³ is a hydrocarbon group having 18 carbon atoms;
   R⁴ is H;
   L² is an alkylene group 2 carbon atoms; and
   X¹ is O;
   and
2) the methacrylate durability enhancing acrylate is glycidylmethacrylate.

### Example 11: Poly (SI-HOEA / VC12 / AOI-MEKO 70/20/10)

Example 11 was prepared using the synthetic procedure to prepare example 8, but replacing 20% by weight of the SI-HOEA by VC12. The material of Example 11 is a polymeric compound derived from a co-polymerization of acrylates wherein:
1) the "SI-HOEA" urethane acrylate has the following structure:

   R¹-NH-C(O)O-L¹-OC(O)C(R²)=CH₂ (Formula I);

   wherein:
   R¹ is a hydrocarbon group having 18 carbon atoms;
   R² is H; and
   L¹ is an alkylene group having 2 carbon atoms.
2) VC12 is a vinyl comonomer,
   and
3) the "AOI-MEKO" urethane acrylate is a durability enhancing acrylate with blocked isocyanate groups.

### Example 12: Poly (SI-HOEA / NMAM 90/10)

Example 12 was prepared using the synthetic procedure to prepare example 8, but replacing the AOI-MEKO with N-methylolacrylamid (NMAM). The material of Example 12 is a polymeric compound derived from a co-polymerization of acrylates wherein:
1) the "SI-HOEA" urethane acrylate has the following structure:

   R¹-NH-C(O)O-L¹-OC(O)C(R²)=CH₂ (Formula I);

   wherein:
   R¹ is a hydrocarbon group having 18 carbon atoms;
   R² is H; and
   L¹ is an alkylene group having 2 carbon atoms
   and
2) NMAM is an acrylamid comonomer.

### Example 13: Poly (SA-TDI-HOEA / AOI-MEKO 90/10)

Example 13 was prepared using the synthetic procedure to prepare example 7, but all SA-AOI urethane acrylate was replaced by SA-TDI-HOEA urethane acrylate. The material of Example 13 is a polymeric compound derived from a co-polymerization of acrylates wherein:
1) The "SA-TDI-HOEA" urethane acrylate has the following structure:

   R⁵-X²-C(O)NH-Q-NHC(O)O-L³-OC(O)C(R⁶)=CH₂ (Formula III)

   wherein:
   R⁵ is a hydrocarbon group having 18 carbon atoms;
   R⁶ is H;
   L³ is an alkylene group having 2 carbon atoms;
   X² is O; and
   Q is a 2,4-toluene diisocyanate (TDI) residue.
   and
2) the "AOI-MEKO" urethane acrylate is a durability enhancing acrylate with blocked isocyanate groups.

### Emulsification procedure of homo and copolymers

In a three-necked 1000-mL flask, fitted with a stirrer, heating mantle, thermometer, and cooler were placed 200 g of a 50% solids reaction mixture of the above-prepared homo and copolymers (in ethylacetate). The mixture was heated up to 70°C and mixed until a clear solution in ethylacetate was obtained.

In a 1000-mL beaker were placed 3 g Tergitol 15-S-30, 6 g Tergitol TMN-6, 3.7 g Armocare VGH-70 ( 70% solids), and 400 g DI-water. This mixture was also warmed up to about 70°C and then added under vigorous stirring to the above mentioned organic solution in the 1000 mL three necked flask. A pre-emulsion was obtained at 70°C. This pre-emulsion was passed 3 times through a pre-heated 2-step Manton-Gaulin homogenizer at 300 bar pressure. Solvent was stripped off at temperature of about 45°C to 50°C and vacuum of about 20-30 mm Hg. A stable dispersion of about 20% solids in water resulted. All materials were emulsified using this general procedure.

### Results

Textile fabrics used: polyester PES microfiber fabric with wet-pick-up 76.4% and polyamide PA microfiber fabric with wet pick-up of 74.9%. Application was done by padding application using an aqueous treatment bath containing 0.1% acetic acid and 1% isopropanol. Add-on level was 0.6% solids on fabric (SOF) and 1% SOF. Curing was done for 2 minutes at 175°C. The fabrics were tested for their water repellency by the "Spray Rating (SR)" test indicated previously.

Fabrics were laundered for 10 or 20 times at 40°C using a commercial Miele laundering machine and using standard detergent. After the last cycle, fabrics were dried for 24 hours and ironed (IR) at 180°C for 3 seconds; the SR value was then determined again.

Results of the treatments and tests are summarized in Table 3. Add-on levels were 0.6% SOF with curing of 2 minutes at 175°C.

**Table 3: Spray Ratings Copolymers (0.6% solids on fabric (SOF))**

| Example | Initial, SR (PES) | Initial, SR (PA) | 10L-SR (PES) | 10L-SR (PA) | 20L-SR (PES) | 20L-SR (PA) |
|---|---|---|---|---|---|---|
| 6 | 100 | 100 | 70 | 50 | 50 | 50 |
| 7 | 100 | 100 | 80 | 70 | 70 | 50 |
| 8 | 100 | 90 | 80 | 70 | 50 | 50 |
| 9 | 90 | 80 | 50 | 50 | 0 | 0 |
| 10 | 100 | 90 | 70 | 50 | 0 | 0 |
| 11 | 100 | 100 | 80 | 80 | 70 | 70 |
| 12 | 100 | 100 | 80 | 70 | 80 | 70 |
| 13 | 100 | 100 | 85 | 80 | 80 | 70 |

Various modifications and alterations to this disclosure will become apparent to those skilled in the art.

It should be understood that this disclosure is not intended to be unduly limited by the illustrative embodiments and examples set forth herein and that such examples and embodiments are presented by way of example only with the scope of the disclosure intended to be limited only by the claims set forth herein as follows.

## Claims

1. A method of treating a fibrous substrate, the method comprising applying a fluorine-free treating composition in an amount sufficient to make the fibrous substrate water repellent having a minimum initial spray rating of at least 80, as determined by the Spray Rating Test, wherein the treating composition comprises:
one or more polymeric compounds derived from the polymerization of at least one (meth)acrylate monomer comprising at least one isocyanate-derived group and at least one hydrocarbon group having at least 16 carbon atoms,
wherein at least 70% by weight of the one or more polymeric compounds is obtained from polymerization of a (meth)acrylate monomer comprising at least one isocyanate-derived group and at least one hydrocarbon group having from 16 to 60 carbon atoms.

2. The method of claim 1, wherein the one or more polymeric compounds is obtained from polymerization of at least one (meth)acrylate monomer comprising at least one isocyanate-derived group and at least one hydrocarbon group having from 16 to 60 carbon atoms.

3. The method of any one of claims 1 to 2, wherein the treating composition comprises one or more polymeric compounds derived from the polymerization of at least one (meth)acrylate monomer having at least one of the following formulas:
R¹-NH-C(O)O-L¹-OC(O)C(R²)=CH₂ (Formula I);
R³-X¹-C(O)NH-L²-OC(O)C(R⁴)=CH₂ (Formula II);
and
R⁵-X²-C(O)NH-Q-NHC(O)O-L³-OC(O)C(R⁶)=CH₂ (Formula III);
wherein:
R¹, R³, and R⁵ are independently a hydrocarbon group having at least 16 carbon atoms;
R², R⁴, and R⁶ are independently H or CH₃;
L¹, L², and L³ are independently a branched or straight chain alkylene group having 2 to 10 carbon atoms, an arylene group, or a combination thereof;
X¹ and X² are independently O, S, -NH, or -N(R⁷), wherein R⁷ is a hydrocarbon group having 1 to 20 carbon atoms; and
Q is an isocyanate residue.

4. The method of any one of claims 1 to 3, wherein the isocyanate-derived group present in the (meth)acrylate monomer is a urethane group or a urea group.

5. The method of any one of claims 1 to 4, wherein the one or more polymeric compounds have an average of at least 10 repeating units of at least one (meth)acrylate monomer comprising at least one isocyanate-derived group and at least one hydrocarbon group having from 16 to 60 carbon atoms.

6. The method of claim 1, wherein the treating composition comprises:
one or more polymeric compounds derived from the polymerization of at least one (meth)acrylate having at least one of the following formulas:
C₁₈H₃₇-NH-C(O)O-CH₂CH₂-OC(O)C(R²)=CH₂ (Formula Ia);
C₁₈H₃₇OC(O)NH-CH₂CH₂-OC(O)C(R⁴)=CH₂ (Formula IIa);
or
C₁₈H₃₇O-C(O)NH-C₇H₆-NHC(O)O-CH₂CH₂-OC(O)C(R⁶)=CH₂ (Formula IIIa);
wherein R², R⁴, and R⁶ are independently H or CH₃.

7. The method of claim 6, wherein the one or more polymeric compounds have an average of at least 10 repeating units of the at least one (meth)acrylate.

8. The method of any one of claims 1 to 7, wherein the reaction mixture for making the one or more polymeric compounds additionally includes a durability enhancing (meth)acrylate.

9. The method of any one of claims 1 to 8, wherein the composition is an aqueous dispersion optionally comprising one or more additives selected from a surfactant, a coalescing solvent, an anti-freeze solvent, an emulsifier, or a stabilizer against one or more microorganisms.

10. The method of any one of claims 1 to 9, wherein the fibrous substrate is selected from the group of textile, leather, carpet, paper, and nonwoven fabrics.

11. The method of claim 1, wherein applying a fluorine-free treating composition further comprises applying the fluorine-free treating composition in an amount sufficient to make the fibrous substrate durably water repellent having a spray rating of at least 50 after 10 launderings, as determined by the Spray Rating Test with launderings.

12. A fibrous substrate treated by the method of any one of claims 1 to 11.

## Patentansprüche

1. Ein Verfahren zum Behandeln eines Fasersubstrats, wobei das Verfahren das Auftragen einer fluorfreien Behandlungszusammensetzung in einer Menge umfasst, die ausreichend ist, um das Fasersubstrat wasserabweisend zu machen, wobei es eine durch die Sprühbewertungsprüfung bestimmte minimale anfängliche Sprühbewertung von mindestens 80 aufweist, wobei die Behandlungszusammensetzung umfasst:
eine oder mehrere polymere Verbindungen, die von der Polymerisation von mindestens einem (Meth)acrylatmonomer, das mindestens eine von Isocyanat abgeleitete Gruppe und mindestens eine Kohlenwasserstoffgruppe mit mindestens 16 Kohlenstoffatomen umfasst, abgeleitet sind,
wobei mindestens 70 Gew.-% der einen oder mehreren polymeren Verbindungen aus der Polymerisation eines (Meth)acrylatmonomers, das mindestens eine von Isocyanat abgeleitete Gruppe und mindestens eine Kohlenwasserstoffgruppe mit 16 bis 60 Kohlenstoffatomen umfasst, erhalten werden.

2. Das Verfahren nach Anspruch 1, wobei die eine oder mehreren polymeren Verbindungen aus der Polymerisation mindestens eines (Meth)acrylatmonomers, das mindestens eine von Isocyanat abgeleitete Gruppe und mindestens eine Kohlenwasserstoffgruppe mit 16 bis 60 Kohlenstoffatomen umfasst, erhalten werden.

3. Das Verfahren nach einem der Ansprüche 1 bis 2, wobei die Behandlungszusammensetzung eine oder mehrere polymere Verbindungen umfasst, die aus der Polymerisation mindestens eines (Meth)acrylatmonomers, das mindestens eine der folgenden Formeln hat, abgeleitet sind:
R¹-NH-C(O)O-L¹-OC(O)C(R²)=CH₂ (Formel I);
R³-X¹-C(O)NH-L²-OC(O)C(R⁴)=CH₂ (Formel II);
und
R⁵-X²-C(O)NH-Q-NHC(O)O-L³-OC(O)C(R⁶)=CH₂ (Formel III);
wobei:
R¹, R³ und R⁵ unabhängig eine Kohlenwasserstoffgruppe mit mindestens 16 Kohlenstoffatomen sind;
R², R⁴ und R⁶ unabhängig H oder CH₃ sind;
L¹, L² und L³ unabhängig eine verzweigte oder geradkettige Alkylengruppe mit 2 bis 10 Kohlenstoffatomen, eine Arylengruppe oder eine Kombination davon sind;
X¹ und X² unabhängig O, S, -NH oder -N(R⁷) sind, wobei R⁷ eine Kohlenwasserstoffgruppe mit 1 bis 20 Kohlenstoffatomen ist; und
Q ein Isocyanatrest ist.

4. Das Verfahren nach einem der Ansprüche 1 bis 3, wobei die von Isocyanat abgeleitete Gruppe, die in dem (Meth)acrylatmonomer vorhanden ist, eine Urethangruppe oder eine Harnstoffgruppe ist.

5. Das Verfahren nach einem der Ansprüche 1 bis 4, wobei die eine oder die mehreren polymeren Verbindungen durchschnittlich mindestens 10 Wiederholungseinheiten mindestens eines (Meth)acrylatmonomers, das mindestens eine von Isocyanat abgeleitete Gruppe und mindestens eine Kohlenwasserstoffgruppe mit 16 bis 60 Kohlenstoffatomen umfasst, aufweisen.

6. Das Verfahren nach Anspruch 1, wobei die Behandlungszusammensetzung umfasst:
eine oder mehrere polymere Verbindungen, die von der Polymerisation mindestens eines (Meth)acrylats, das mindestens eine der folgenden Formeln hat, abgeleitet sind:
C₁₈H₃₇-NH-C(O)O-CH₂CH₂-OC(O)C(R²)=CH₂ (Formel Ia);
C₁₈H₃₇OC(O)NH-CH₂CH₂-OC(O)C(R⁴)=CH₂ (Formel IIa);
oder
C₁₈H₃₇O-C(O)NH-C₇H₆-NHC(O)O-CH₂CH₂-OC(O)C(R⁶)=CH₂ (Formel IIIa);
wobei R², R⁴ und R⁶ unabhängig H oder CH₃ sind.

7. Das Verfahren nach Anspruch 6, wobei die eine oder die mehreren polymeren Verbindungen durchschnittlich mindestens 10 Wiederholungseinheiten des mindestens einen (Meth)acrylats aufweisen.

8. Das Verfahren nach einem der Ansprüche 1 bis 7, wobei das Reaktionsgemisch zur Herstellung der einen oder mehreren polymeren Verbindungen zusätzlich ein die Haltbarkeit verbesserndes (Meth)acrylat enthält.

9. Das Verfahren nach einem der Ansprüche 1 bis 8, wobei die Zusammensetzung eine wässrige Dispersion ist, die gegebenenfalls ein oder mehrere Additive umfasst, ausgewählt aus einem Surfactant, einem koaleszierenden Lösungsmittel, einem Frostschutzlösungsmittel, einem Emulgator oder einem Stabilisator gegenüber einem oder mehreren Mikroorganismen.

10. Das Verfahren nach einem der Ansprüche 1 bis 9, wobei das Fasersubstrat aus der Gruppe von Textil, Leder, Teppich, Papier und Vliesstoffen ausgewählt ist.

11. Das Verfahren nach Anspruch 1, wobei Auftragen einer fluorfreien Behandlungszusammensetzung ferner Auftragen der fluorfreien Behandlungszusammensetzung in einer Menge umfasst, die ausreichend ist, um das Fasersubstrat dauerhaft wasserabweisend zu machen, wobei es nach 10 Waschvorgängen eine durch den Sprühbewertungstest mit Waschvorgängen bestimmte Sprühbewertung von mindestens 50 aufweist.

12. Ein Fasersubstrat, das durch das Verfahren nach einem der Ansprüche 1 bis 11 behandelt ist.

## Revendications

1. Procédé de traitement d'un substrat fibreux, le procédé comprenant l'application d'une composition de traitement sans fluor en une quantité suffisante pour rendre le substrat fibreux hydrofuge ayant une notation minimale initiale de pulvérisation d'au moins 80, telle que déterminée par le test de notation de pulvérisation, dans lequel la composition de traitement comprend :
un ou plusieurs composés polymères dérivés de la polymérisation d'au moins un monomère (méth)acrylate comprenant au moins un groupe dérivé d'isocyanate et au moins un groupe hydrocarboné ayant au moins 16 atomes de carbone,
dans lequel au moins 70 % en poids du ou des composés polymères sont obtenus par la polymérisation d'un monomère (méth)acrylate comprenant au moins un groupe dérivé d'isocyanate et au moins un groupe hydrocarboné ayant de 16 à 60 atomes de carbone.

2. Procédé selon la revendication 1, dans lequel le ou les composés polymères sont obtenus par la polymérisation d'un monomère (méth)acrylate comprenant au moins un groupe dérivé d'isocyanate et au moins un groupe hydrocarboné ayant de 16 à 60 atomes de carbone.

3. Procédé selon l'une quelconque des revendications 1 à 2, dans lequel la composition de traitement comprend un ou plusieurs composés polymères dérivés de la polymérisation d'au moins un monomère (méth)acrylate ayant au moins une des formules suivantes :
R¹-NH-C(O)O-L¹-OC(O)C(R²)=CH₂ (Formule I) ;
R³-X¹-C(O)NH-L²-OC(O)C(R⁴)=CH₂ (Formule II) ;
et
R⁵-X²-C(O)NH-Q-NHC(O)O-L³-OC(O)C(R⁶)=CH₂ (Formule III) ;
dans lequel :
R¹, R³ et R⁵ sont indépendamment un groupe hydrocarboné ayant au moins 16 atomes de carbone ;
R², R⁴ et R⁶ sont indépendamment H ou CH₃ ;
L¹, L² et L³ sont indépendamment un groupe alkylène à chaîne ramifiée ou linéaire ayant 2 à 10 atomes de carbone, un groupe arylène, ou une combinaison de ceux-ci ;
X¹ et X² sont indépendamment O, S, -NH, ou -N(R⁷), dans lequel R⁷ est un groupe hydrocarboné ayant 1 à 20 atomes de carbone ; et
Q est un résidu isocyanate.

4. Procédé selon l'une quelconque des revendications 1 à 3, dans lequel le groupe dérivé d'isocyanate présent dans le monomère (méth)acrylate est un groupe uréthane ou un groupe urée.

5. Procédé selon l'une quelconque des revendications 1 à 4, dans lequel le ou les composés polymères ont une moyenne d'au moins 10 motifs de répétition d'au moins un monomère (méth)acrylate comprenant au moins un groupe dérivé d'isocyanate et au moins un groupe hydrocarboné ayant de 16 à 60 atomes de carbone.

6. Procédé selon la revendication 1, dans lequel la composition de traitement comprend :
un ou plusieurs composés polymères dérivés de la polymérisation d'au moins un (méth)acrylate ayant au moins une des formules suivantes :
C₁₈H₃₇-NH-C(O)O-CH₂CH₂-OC(O)C(R²)=CH₂ (Formule la) ;
C₁₈H₃₇OC(O)NH-CH₂CH₂-OC(O)C(R⁴)=CH₂ (Formule IIa) ;
ou
C₁₈H₃₇O-C(O)NH-C₇H₆-NHC(O)O-CH₂CH₂-OC(O)C(R⁶)=CH₂ (Formule IIIa) ;
dans lequel R², R⁴, et R⁶ sont indépendamment H ou CH₃.

7. Procédé selon la revendication 6, dans lequel le ou les composés polymères ont une moyenne d'au moins 10 motifs de répétition de l'au moins un (méth)acrylate.

8. Procédé selon l'une quelconque des revendications 1 à 7, dans lequel le mélange réactionnel pour fabriquer le ou les composés polymères inclut en outre un (méth)acrylate d'augmentation de durabilité.

9. Procédé selon l'une quelconque des revendications 1 à 8, dans lequel la composition est une dispersion aqueuse comprenant facultativement un ou plusieurs additifs choisis parmi un agent tensioactif, un solvant coalescent, un solvant antigel, un émulsifiant, ou un agent stabilisant vis-à-vis d'un ou plusieurs micro-organismes.

10. Procédé selon l'une quelconque des revendications 1 à 9, dans lequel le substrat fibreux est choisi dans le groupe de textile, cuir, tapis, papier, et étoffes non tissées.

11. Procédé selon la revendication 1, dans lequel l'application d'une composition de traitement sans fluor comprend en outre l'application de la composition de traitement sans fluor en une quantité suffisante pour rendre le substrat fibreux durablement hydrofuge ayant une notation de pulvérisation d'au moins 50 après 10 lavages, telle que déterminée par le test de notation de pulvérisation avec lavages.

12. Substrat fibreux traité par le procédé de l'une quelconque des revendications 1 à 11.
